# FASCICULE DE BREVET EUROPEEN

(11) **EP 3 204 282 B1**
(45) Date de publication et mention de la délivrance du brevet: **09.01.2019**
(21) Numéro de dépôt: 15763972.5
(22) Date de dépôt: 07.09.2015
(51) Int. Cl.: B62D 25/20

(54) **PLANCHE À TALON AVEC INSERT STRUCTURANT**
FERSENPLATTE MIT EINEM STRUKTURIERUNGSEINSATZ
HEEL BOARD HAVING A STRUCTURING INSERT

(30) Priorité: 07.10.2014 FR 1459583
(43) Date de publication de la demande: 16.08.2017
(73) Titulaire: PSA Automobiles SA, 78300 Poissy (FR)
(72) Inventeur: JAUMONT, Patrick, 94400 Vitry sur Seine (FR)
(86) Numéro de dépôt international: PCT/FR2015/052360
(87) Numéro de publication internationale: WO 2016/055703

(56) Documents cités:
- DE-A1-102011 089 051
- JP-A- 2012 046 009
- US-A1- 2007 284 914
- US-A1- 2010 140 977

## Description

L'invention concerne une planche à talon de véhicule. Le document DE 10 2011 089 051 A1 divulgue le préambule de la revendication 1.

Généralement, les véhicules comportent un plancher avant et un plancher sous l'assise des sièges arrière, le plancher d'assise étant surélevé par rapport au plancher avant du véhicule. Le plancher d'assise est relié au plancher avant par une planche à talon sensiblement verticale et s'étendant sur toute la largeur de l'habitacle du véhicule. La planche à talon est fixée par ses bords latéraux aux longerons du véhicule, au plancher avant et au plancher d'assise. Le plancher d'assise est généralement formé par une partie centrale créant une surface en pente inclinée vers le bas en direction de l'arrière du véhicule, tandis que les parties latérales de ce plancher d'assise, le long des bords latéraux du véhicule, sont sensiblement à la même hauteur que les longerons latéraux. Le bord avant de la partie centrale du plancher d'assise est située plus haut que les longerons latéraux. La forme de la partie centrale du plancher d'assise permet par exemple de créer une surface de retenue évitant le sous-marinage des passagers en cas de choc avant, tandis que les parties latérales permettent de faciliter l'accès aux places arrière. Le bord de la planche à talon fixé au plancher d'assise comporte un tronçon central sensiblement horizontal suivant la partie centrale du plancher d'assise, et des tronçons latéraux formant une pente descendante vers les longerons du véhicule.

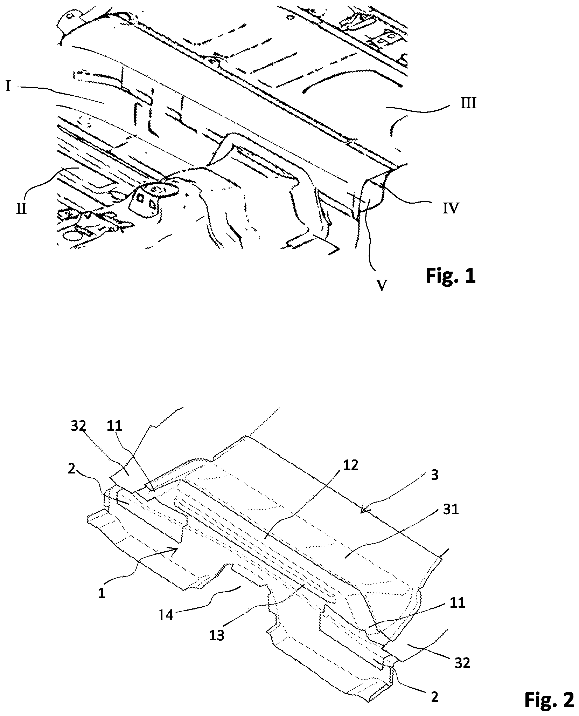

En cas de choc latéral, une partie des efforts transitent par la planche à talon. L'évolution des réglementations impose que les véhicules résistent à des chocs latéraux de plus en plus sévères. Afin d'augmenter la capacité de la planche à talon à faire passer des efforts et pour limiter les déformations de ladite planche à talon, notamment le flambage ainsi que des torsions suivant l'axe transversal du véhicule, il est connu de placer des éléments de renfort s'étendant sur toute la largeur de la planche à talon, comme par exemple une poutre fixée à la planche à talon et s'étendant d'un longeron à l'autre. La fig. 1 montre une plancher de véhicule comportant une telle planche à talon I, reliée d'un côté au plancher avant II et au plancher d'assise III. Un profilé IV est fixé derrière la planche à talon I, sur la face de la planche à talon orientée vers l'extérieur de l'habitacle du véhicule, et forme un corps creux V s'étendant sur toute la largeur de ladite planche à talon I. Le profilé IV crée un volume sur toute la largeur de la planche à talon I, et diminue le volume disponible derrière ladite planche à talon I, sous la plancher d'assise III, dans lequel par exemple peut être installé un réservoir à carburant.

Le problème d'une telle conception est qu'elle est lourde, car le profilé formant le corps creux s'étend transversalement tout le long de la planche à talon. De plus, cette solution diminue le volume disponible autour de la planche à talon.

La présente invention a pour but d'améliorer le comportement du véhicule en cas de choc latéral. En particulier, elle a pour objectif de renforcer la planche à talon, en minimisant l'augmentation de la masse du véhicule, et en minimisant l'augmentation du volume de la planche à talon.

Ce but est atteint selon l'invention, grâce à une planche à talon destinée à former une partie du plancher d'un véhicule en étant fixée d'une part aux longerons latéraux du véhicule par ces bords latéraux, et d'autre part au plancher d'assise par son bord supérieur et au plancher avant par son bord inférieur, les bords supérieurs et inférieurs s'étendant entre les deux bords latéraux et le plancher d'assise étant situé plus haut que le plancher avant, caractérisée en ce que la planche à talon comporte au moins deux renforts latéraux s'étendant chacun sensiblement depuis l'un des bords latéraux de la planche à talon en direction de la partie centrale de la planche à talon, les deux renforts latéraux étant distants l'un de l'autre au moins dans la direction de l'axe transversal du véhicule lorsque la planche à talon est fixée au véhicule.

Ainsi, de manière surprenante, la rigidité de la planche à talon reste élevée malgré le fait que les renforts ne s'étendent pas sur toute la largeur de la planche à talon. Les tests ont en effet montré que le renforcement des parties latérales de la planche à talon permet une amélioration importante de la rigidité et de la stabilité de ladite planche à talon en cas de choc latéral. Les renforts latéraux ne s'étendant pas sur toute la largeur de la planche à talon, laissant en particulier une partie centrale de ladite planche à talon sans renfort, la masse ainsi que le volume des renforts de la planche à talon sont diminuées.

Selon l'invention, le bord supérieur de ladite planche à talon comporte deux tronçons latéraux et un tronçon central, les tronçons latéraux s'étendant chacun entre l'un des bords latéraux et l'une des extrémités du tronçon central, et formant un dénivelé entre leur jonction avec les tronçons latéraux et leur jonction avec le tronçon central, le tronçon central étant positionnée plus haut que les tronçons latéraux lorsque la planche à talon est fixée au véhicule.

Cette forme du bord supérieur de la planche à talon permet d'avoir un plancher d'assise comportant une surface centrale plus haute que les longerons et des parties latérales de chaque côté de la surface centrale du plancher d'assise qui rejoignent lesdits longerons. Par conséquent, la section suivant un plan vertical et parallèle à l'axe longitudinal du véhicule de la planche à talon dans la partie latérale de ladite planche à talon située au niveau des tronçons latéraux, est plus petite que la section suivant le même plan dans la partie centrale de ladite planche à talon située au niveau du tronçon central. La rigidité de la planche à talon est alors plus faible au niveau de ces parties latérales qu'au niveau de la partie centrale. Le positionnement des renforts latéraux au moins en partie dans la zone de la planche à talon dont le bord supérieur comporte au moins une partie des tronçons latéraux, permet avantageusement de rigidifier cette zone de la planche à talon plus fragile que la partie centrale de ladite planche à talon.

Dans un autre mode de réalisation de l'invention, les renforts latéraux s'étendent au moins jusqu'à la jonction entre les tronçons latéraux et le tronçon central, suivant l'axe transversal du véhicule lorsque ladite planche à talon est fixé sur le véhicule,

Ainsi, les parties latérales de la planche à talon situées au niveau des bords latéraux sont renforcées jusqu'au moins la partie de la planche à talon comportant la partie centrale dont la section plus grande est plus résistante que les parties latérales. En cas de choc, les parties latérales avec les renforts latéraux vont transmettre les efforts vers la partie centrale de la planche à talon en limitant la déformation de ladite planche à talon.

Dans un autre mode de réalisation de l'invention, les renforts latéraux s'étendent depuis les bords latéraux au plus jusqu'à un quart de la distance entre les deux bords latéraux, ou au plus jusqu'à un sixième de la distance entre les deux bords latéraux.

Dans un autre mode de réalisation de l'invention, la planche à talon comporte au moins un renfort central s'étendant au moins entre les deux renforts latéraux.

Ainsi, la partie centrale de la planche à talon non renforcée par les renforts latéraux est rigidifiée pour éviter qu'elle ne se déforme en cas de choc latéral sous de faibles efforts. En particulier, un tel renfort est avantageusement mise en place lorsque la planche à talon comporte une échancrure au milieu de son bord inférieur afin de faire passer un tunnel central lorsque le plancher du véhicule en comporte un, la dimension de la section de la planche à talon au niveau de l'échancrure, suivant un plan vertical et longitudinal dans le référentiel du véhicule lorsque la planche à talon est fixée sur le véhicule, étant plus faible que sur le reste de la partie centrale de ladite planche à talon.

De préférence, le renfort central est réalisé par une forme particulière de la planche à talon elle-même, comme par exemple par des reliefs.

Dans un autre mode de réalisation de l'invention, le renfort central est réalisé par au moins une nervure s'étendant parallèlement au tronçon central.

Ainsi, le renfort central est réalisé sans ajouter de matière, et donc de masse.

Dans un autre mode de réalisation de l'invention, chaque renfort latéral est réalisé chacun par au moins une plaque fixée à la planche à talon.

Dans un autre mode de réalisation de l'invention, les plaques formant les renforts latéraux et la partie de la planche à talon recevant les plaques sont conformés pour former entre elles un corps creux.

Cette configuration permet de créer un corps creux améliorant la résistance en cas de choc latéral. La création du corps creux permet d'augmenter le moment d'inertie de la planche à talon pour les efforts provenant d'un choc latéral. Le corps creux est réalisé par la coopération entre la forme des plaques et la forme de la planche à talon. La forme du corps creux peut être principalement réalisée par la forme en creux des plaques, ou à l'inverse, par une forme en creux localement de la planche à talon. Elle peut être réalisée aussi par des formes en creux des plaques et de la partie de la planche à talon recevant les plaques.

Dans un mode de réalisation préféré de l'invention, les plaques sont positionnées sur la face de la planche à talon côté habitacle du véhicule. Dans un autre mode de réalisation préféré de l'invention, les plaques sont positionnées sur la face de la planche à talon orientée vers l'extérieur de l'habitacle du véhicule.

Dans un autre mode de réalisation de l'invention, les plaques sont fixées par un de leur bord aux longerons du véhicule.

Ainsi, une partie des efforts en cas de choc latéral transite directement par les plaques des renforts latéraux.

L'invention porte aussi sur un véhicule comportant une planche à talon telle que décrite précédemment.

L'invention sera mieux comprise à la lecture de la description qui va suivre, donnée uniquement à titre d'exemple et faite en se référant aux dessins annexés, sur lesquels :
- La fig. 2 est une vue en perspective d'une planche à talon suivant l'invention, reliée à un plancher d'assise, et comportant des renforts latéraux,
- La fig. 3 est une vue de face de la planche à talon
- Les fig. 4a et 4b sont des vues en perspective d'une coupe de la planche à talon suivant le plan de coupe A-A indiqué en fig. 2, suivant deux variantes de réalisation de l'invention.
- La fig. 5 est une section suivant B-B de la planche à talon, indiquée en fig. 2

Les dessins sont des représentations schématiques pour faciliter la compréhension de l'invention. Les composants ne sont pas forcément représentés à l'échelle. Les mêmes références correspondent aux mêmes composants d'une figure à l'autre.

Les termes avant, arrière, haut, bas, latéral, sont définis par rapport au véhicule lorsque la planche à talon est installée dans le véhicule. De même, les directions transversale et longitudinale correspondent aux directions transversale et longitudinale du véhicule lorsque la planche à talon est fixée sur le véhicule.

La fig. 2 montre une planche à talon 1, équipée de deux renforts latéraux 2. La planche à talon 1 s'étend entre deux longerons latéraux non représentés, positionnés classiquement de chaque côté d'un plancher de véhicule.

La planche à talon 1 fait la jonction entre un plancher avant (non représenté en fig. 2) et un plancher d'assise 3, le plancher d'assise 3 étant situé plus haut que le plancher avant. La plancher d'assise 3 supporte la ou les assises du siège arrière. Le plancher d'assise 3 comporte une large surface centrale 31 formant une pente orientée vers le haut dans la direction de l'avant. Cette surface centrale 31 du plancher d'assise 3 permet de donner une pente à l'assise arrière pour le confort des passagers et de créer un appui pour l'anti-sous marinage des passagers arrières. Les parties latérales du plancher d'assise 3 forment un dénivelé, à partir de ladite surface centrale 31 et jusqu'à approximativement la même hauteur que les longerons latéraux. Ces parties latérales du plancher d'assise 3 sont reliées à chaque côté de la structure latérale intérieure du véhicule par des éléments de plancher arrière 32. En variante, le plancher d'assise 3 peut s'étendre jusqu'à chaque côté de la structure latérale intérieure du véhicule. Le plancher d'assise 3, la planche à talon 1 et les éléments de plancher arrière 32 sont de préférence en tôle métallique, comme par exemple en acier, en aluminium ou en alliage d'aluminium. En variante, ils peuvent être réalisés en matériaux composites.

La planche à talon 1 est fixée au plancher d'assise 3 par son bord supérieur, et au plancher avant par son bord inférieur. La planche à talon 1 comporte une face sensiblement verticale s'étendant entre le plancher avant et le plancher d'assise 3. Respectivement, le bord supérieur et le bord inférieur peuvent comporter un ou plusieurs bords tombés pour faire la liaison avec respectivement le plancher d'assise 3 et le plancher avant. Afin de suivre la forme du bord avant du plancher d'assise 3, le bord supérieur de la planche à talon 1 comporte un tronçon central 12 parcourant le bord avant de la surface centrale 31 du plancher d'assise 3, et de chaque côté du tronçon central 12, le bord supérieur de la planche à talon 1 forme deux tronçons latéraux 11 suivant le bord avant des parties latérales du plancher d'assise 3. Les tronçons latéraux 11 forment donc une pente reliant les bords latéraux de la planche à talon au tronçon central 1, le tronçon central 12 étant situé plus haut que les tronçons latéraux 11 de la planche à talon lorsque la planche à talon 1 est installée sur le véhicule.

Afin de renforcer la planche à talon 1, ladite planche à talon 1 comportent deux renforts latéraux 2. Chacun de ces renforts latéraux 2 est placé contre l'un des bords latéraux de la planche à talon 1 ou à proximité. De préférence, ils sont placés approximativement à moins de cinq centimètres des bords latéraux. Ces renforts latéraux 2 s'étendent transversalement vers le milieu de la planche à talon 1, au moins sous chacun des tronçons latéraux 11 du bord supérieur de la planche à talon 1. En variante, ils peuvent s'étendre sur une plus petite distance ou une plus grande distance en fonction de la configuration de la planche à talon 1. Les renforts latéraux 2 renforcent ainsi la planche à talon 1 au moins dans la zone de ladite planche à talon 1 dont la section est plus petite que la section de la partie de la planche à talon située sous le tronçon central 12.

Pour rigidifier si nécessaire la planche à talon 1 au moins entre les renforts latéraux 2, un renfort central 13 peut être placé sur ladite planche à talon 1. De préférence, comme montré dans la fig. 2, ce renfort central 13 peut être réalisé par une nervure 13 s'étendant transversalement obtenue par la mise en forme de la planche à talon 1. La nervure 13 peut s'étendre sur une longueur supérieure à la distance séparant les deux renforts latéraux 2. Elle est située sur une zone de la planche à talon 1 située au-dessus des renforts latéraux 2.

En variante, le renfort central peut être aussi réalisé par l'ajout de pièces de renfort, comme par exemple une plaque en matériau composite ou en métal.

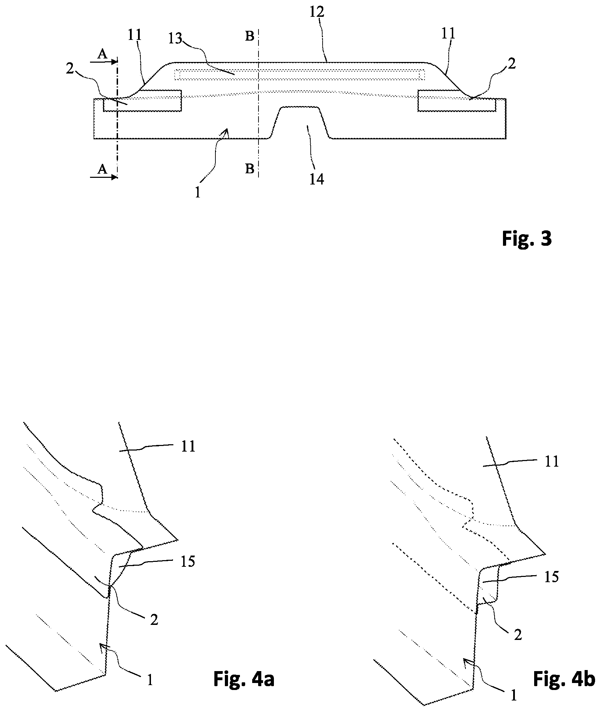

Dans le cas d'une planche à talon comportant sur son bord inférieur une échancrure 14 agencée pour permettre le passage d'un tunnel central disposé sur le plancher avant, tel qu'illustré dans les fig. 2 et 3, le renfort central 13 permet de renforcer la planche à talon au moins au niveau de la partie de la planche à talon située au-dessus de l'échancrure 14.

Les fig. 4a et 4b montrent, suivant la coupe A-A indiquée en fig. 3, des variantes de réalisation des renforts latéraux 2 formées par une plaque fixée à la planche à talon 1 de manière à former un corps creux 15 entre ladite plaque et ladite planche à talon 1. Dans la figure 4a, les plaques sont placées sur la face de la planche à talon 1 orientée du côté de l'habitacle du véhicule. La planche à talon 1 forme localement un renfoncement au-dessus duquel est placée la plaque de manière à créer un corps creux 15 s'étendant dans une direction transversale au véhicule. La plaque est fixée par ses bords sur la planche à talon au niveau des bords du renfoncement.

La plaque est placée à l'angle entre la paroi verticale de la planche à talon et le bord tombé situé au niveau du tronçon latéral 11. Le renfoncement de la planche à talon 1 forme un pan en biais. Le corps creux 15 est formé par ledit renfoncement en biais et les parois de la plaque dont la section dessine une forme en équerre. La section du corps creux 15 est sensiblement en forme de triangle. Différentes formes de corps creux 15 sont possibles.

Dans la variante montrée en fig. 4b, la plaque est placée du côté de la planche à talon 1 orienté du côté extérieur de l'habitacle du véhicule. Elle est reliée d'un côté à la planche à talon 1 sur le bord tombé au niveau du tronçon latéral 11, et de l'autre côté sur la face sensiblement verticale de ladite planche à talon 1, formant ainsi un corps creux 15 de section sensiblement rectangulaire.

La forme de la section du corps creux 15 peut être variable le long du renfort latéral 2. D'autres formes de section du corps creux 15 peuvent être envisagées, par exemple pour améliorer la rigidité ou pour générer des déformations programmées en cas de choc, ou encore pour minimiser le volume pris par les renforts latéraux 2.

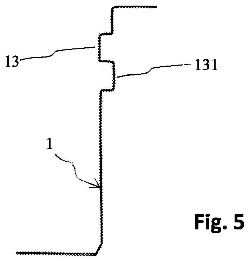

La fig. 5 est une vue suivant la section B-B indiquée en figure 3, de la planche à talon 1. Cette vue montre la nervure 13 renforçant la planche à talon 1 dans la partie de ladite planche à talon située sous le tronçon central 12. La nervure 13 est en relief vers l'habitacle du véhicule. Elle est associée dans cette variante à une rainure 131 orientée vers l'arrière du véhicule, sous la nervure 13. La nervure 13 et la rainure 131 participent toutes les deux à la rigidification de la planche à talon.

## Revendications

1. Planche à talon (1) destinée à former une partie du plancher d'un véhicule en étant fixée d'une part aux longerons latéraux du véhicule par ces bords latéraux, et d'autre part au plancher d'assise (3) par son bord supérieur et au plancher avant par son bord inférieur, les bords supérieurs et inférieurs s'étendant entre les deux bords latéraux et le plancher d'assise (3) étant situé plus haut que le plancher avant, la planche à talon (1) comportant au moins deux renforts latéraux (2) s'étendant chacun sensiblement depuis l'un des bords latéraux de la planche à talon (1) en direction de la partie centrale de la planche à talon (1), les deux renforts latéraux (2) étant distants l'un de l'autre au moins dans la direction de l'axe transversal du véhicule lorsque la planche à talon (1) est fixée au véhicule, **caractérisé en ce que** le bord supérieur de ladite planche à talon (1) comporte deux tronçons latéraux (11) et un tronçon central (12), les tronçons latéraux (11) s'étendant chacun entre l'un des bords latéraux et l'une des extrémités du tronçon central (12), et formant un dénivelé entre leur jonction avec les tronçons latéraux (11) et leur jonction avec le tronçon central (12), le tronçon central (12) étant positionnée plus haut que les tronçons latéraux (11) lorsque la planche à talon (1) est fixée au véhicule.

2. Planche à talon (1) suivant la revendication 1 **caractérisée en ce que** les renforts latéraux (2) s'étendent au moins jusqu'à la jonction entre les tronçons latéraux (11) et le tronçon central (12), suivant l'axe transversal du véhicule lorsque ladite planche à talon (1) est fixé sur le véhicule,

3. Planche à talon (1) suivant la revendication 2 **caractérisée en ce que** les renforts latéraux (2) s'étendent depuis les bords latéraux au plus jusqu'à un quart de la distance entre les deux bords latéraux, ou au plus jusqu'à un sixième de la distance entre les deux bords latéraux.

4. Planche à talon (1) suivant l'une des revendications précédentes **caractérisée en ce qu'**elle comporte au moins un renfort central (13) s'étendant au moins entre les deux renforts latéraux (2).

5. Planche à talon (1) suivant la revendication précédente **caractérisée en ce que** le renfort central (13) est réalisé par au moins une nervure (13) s'étendant parallèlement au tronçon central.

6. Planche à talon (1) suivant l'une des revendications précédentes **caractérisée en ce que** chaque renfort latéral (2) est réalisé chacun par au moins une plaque fixée à la planche à talon.

7. Planche à talon (1) suivant la revendication 6 **caractérisée en ce que** les plaques formant les renforts latéraux (2) et la partie de la planche à talon (1) recevant les plaques sont conformés pour former entre elles un corps creux (15).

8. Planche à talon (1) suivant l'une des revendications de 6 à 7 **caractérisé en ce que** les plaques sont fixées par un de leur bord aux longerons du véhicule.

9. Véhicule comportant une planche à talon (1) suivant l'une des revendications précédentes.

## Patentansprüche

1. Fersenplatte (1), die dazu bestimmt ist, einen Teil des Bodens eines Fahrzeugs zu bilden, indem sie einerseits an den seitlichen Längsträgern des Fahrzeugs durch diese seitlichen Ränder befestigt ist, und andererseits an dem Sitzflächenboden (3) durch ihren oberen Rand, und an dem vorderen Boden durch ihren unteren Rand, wobei sich der obere Rand und der untere Rand zwischen den zwei seitlichen Rändern erstrecken, und der Sitzflächenboden (3) höher liegt als der vordere Boden, wobei die Fersenplatte (1) mindestens zwei seitliche Verstärkungen (2) umfasst, die sich jeweils im Wesentlichen ausgehend von einem der seitlichen Ränder der Fersenplatte (1) in Richtung des zentralen Teils der Fersenplatte (1) erstrecken, wobei die zwei seitlichen Verstärkungen (2) voneinander mindestens in die Richtung der Querachse des Fahrzeugs beabstandet sind, wenn die Fersenplatte (1) an dem Fahrzeug befestigt ist, **dadurch gekennzeichnet, dass** der obere Rand der Fersenplatte (1) zwei seitliche Abschnitte (11) und einen zentralen Abschnitt (12) umfasst, wobei sich die seitlichen Abschnitte (11) jeweils zwischen einem der seitlichen Ränder und einem der Enden des zentralen Abschnitts (12) erstrecken und einen Höhenunterschied zwischen ihrer Fuge mit den seitlichen Abschnitten (11) und ihrer Fuge mit dem zentralen Abschnitt (12) bilden, wobei der zentrale Abschnitt (12) höher positioniert ist als die seitlichen Abschnitte (11), wenn die Fersenplatte (1) an dem Fahrzeug befestigt ist.

2. Fersenplatte (1) nach Anspruch 1, **dadurch gekennzeichnet, dass** sich die seitlichen Verstärkungen (2) mindestens bis zu der Fuge zwischen den seitlichen Abschnitten (11) und dem zentralen Abschnitt (12) entlang der Querachse des Fahrzeugs erstrecken, wenn die Fersenplatte (1) auf dem Fahrzeug befestigt ist.

3. Fersenplatte (1) nach Anspruch 2, **dadurch gekennzeichnet, dass** sich die seitlichen Verstärkungen (2) von den seitlichen Rändern maximal bis zu einem Viertel der Entfernung zwischen den zwei seitlichen Rändern oder maximal bis zu einem Sechstel der Entfernung zwischen den zwei seitlichen Rändern erstrecken.

4. Fersenplatte (1) nach einem der vorstehenden Ansprüche, **dadurch gekennzeichnet, dass** sie mindestens eine zentrale Verstärkung (13) umfasst, die sich mindestens zwischen den zwei seitlichen Verstärkungen (2) erstreckt.

5. Fersenplatte (1) nach dem vorstehenden Anspruch, **dadurch gekennzeichnet, dass** die zentrale Verstärkung (13) aus mindestens einer Rippe (13) besteht, die sich parallel zu dem zentralen Abschnitt erstreckt.

6. Fersenplatte (1) nach einem der vorstehenden Ansprüche, **dadurch gekennzeichnet, dass** jede seitliche Verstärkung (2) jeweils aus mindestens einer Tafel hergestellt ist, die an der Fersenplatte befestigt ist.

7. Fersenplatte (1) nach Anspruch 6, **dadurch gekennzeichnet, dass** die Tafeln, die die seitlichen Verstärkungen (2) bilden, und der Teil der Fersenplatte (1), der die Tafeln aufnimmt, ausgebildet sind, um zwischen einander einen Hohlkörper (15) zu bilden.

8. Fersenplatte (1) nach einem der Ansprüche 6 bis 7, **dadurch gekennzeichnet, dass** die Tafeln durch einen ihrer Ränder an den Längsträgern des Fahrzeugs befestigt sind.

9. Fahrzeug, das eine Fersenplatte (1) nach einem der vorstehenden Ansprüche umfasst.

## Claims

1. A heel board (1) intended to form part of the floor of a vehicle, by being fixed on the one hand to the lateral side members of the vehicle by these lateral edges, and on the other hand to the seat floor (3) by its upper edge, and to the front floor by its lower edge, the upper and lower edges extending between the two lateral edges, and the seat floor (3) being situated higher than the front floor, the heel board (1) comprising at least two lateral reinforcements (2) each extending substantially from one of the lateral edges of the heel board (1) towards the central part of the heel board (1), the two lateral reinforcements (2) being spaced apart from each other, at least in the transverse axis direction of the vehicle, when the heel board (1) is fixed to the vehicle, **characterized in that** the upper edge of said heel board (1) comprises two lateral sections (11) and a central section (12), the lateral sections (11) each extending between one of the lateral edges and one of the ends of the central section (12), and forming a difference in height between their junction with the lateral sections (11) and their junction with the central section (12), the central section (12) being positioned higher than the lateral sections (11) when the heel board (1) is fixed to the vehicle.

2. The heel board (1) according to claim 1, **characterized in that** the lateral reinforcements (2) extend at least up to the junction between the lateral sections (11) and the central section (12), following the transverse axis of the vehicle when said heel board (1) is fixed on the vehicle.

3. The heel board (1) according to claim 2, **characterized in that** the lateral reinforcements (2) extend from the lateral edges at most up to a quarter of the distance between the two lateral edges, or at most up to one sixth of the distance between the two lateral edges.

4. The heel board (1) according to one of the preceding claims, **characterized in that** it comprises at least one central reinforcement (13) extending at least between the two lateral reinforcements (2).

5. The heel board according to the preceding claim, **characterized in that** the central reinforcement (13) is realized by at least one rib (13) extending parallel to the central section.

6. The heel board (1) according to one of the preceding claims, **characterized in that** each lateral reinforcement (2) is realized each by at least one plate fixed to the heel board.

7. The heel board (1) according to claim 6, **characterized in that** the plates forming the lateral reinforcements (2) and the part of the heel board (1) receiving the plates are shaped to form a hollow body (15) between them.

8. The heel board (1) according to one of claims 6 to 7, **characterized in that** the plates are fixed by one of their edges to the side members of the vehicle.

9. A vehicle comprising a heel board (1) according to one of the preceding claims.
